# EUROPEAN PATENT APPLICATION

(11) **EP 2 740 567 A2**
(43) Date of publication of application: **11.06.2014**
(21) Application number: 13466016.6
(22) Date of filing: 21.08.2013
(51) Int. Cl.: B23Q 1/54, B23Q 5/10, B23Q 5/28

(54) **A device for reduction of force transfer to a frame consisting of two parts force-interacting on each other**

(30) Priority: 22.08.2012 CZ 20120566
(71) Applicant: CVUT V Praze, Fakulta Strojní, 166 07 Praha 6 (CZ)
(72) Inventor: Valásek, Michael, 14300 Praha 4 (CZ); Svéda, Jiri, 27201 Kladno (CZ)
(74) Representative: Novotny, Karel

(57) **Abstract**

The invention concerns a device for reduction of force transfer to a frame (5) consisting of two parts (21, 22) force-interacting on each other, the first part (21) and the second part (22), in particular a tool and a work-piece when machining on a machining machine, connected moveably to a common frame (5) by means of parallel kinematic structures formed by platforms (1, 3) and a system of braces (6, 7, 9, 17) which connect the first part (21) to the frame (5) and the second part (22) to the frame (5) through carriages (11, 12, 14) and/or actuators (13, 15, 16), whereas the first part (21) includes the first platform (1) and the second part (22) includes the second platform (3) and the both parts (21, 22) are connected to the frame (5) by means of linear and/or rotary actuators acting between the parts (21, 22) and the frame (5) for adjustment of a relative position of the platforms (1) and (3), and/or there are linear and/or rotary actuators arranged between the both parts (21, 22) for adjustment of a relative position of the platforms (1) and (3), whereas each of these actuators is connected both to the part (21) and to the part (22).

Each platform (1, 3) is connected moveably to the frame (5) by means of fixed braces (6) and push braces (7), which are connected moveably to the frame (5) through the carriages (11, 12, 14) or the actuators (13, 16) with the linear actuators, or by means of rotational braces (9) which are rotationally connected to the frame (5) through the rotary actuators (15), whereas always one linear or rotary actuator of the first part (21) forms a pair with the linear or rotary actuator of the second part (22) and axes of these pairs of actuators are parallel or coaxial.

Alternatively, between the platforms (1, 3) there are the fixed and push braces (6, 7) and the carriages (11, 12, 14) or the actuators (13, 16) fitted with the linear actuators acting between the platforms (1, 3) and/or the rotational braces (9) fitted with the rotary actuator (15) acting between the platforms (1, 3) arranged.

## Description

### Technical Field

The invention concerns a device for reduction of force transfer to a frame of two parts force-interacting on each other, the first part and the second part, in particular a tool and a work-piece when machining on a machining machine, connected movably to a common frame by means of parallel kinematic structures formed by platforms and a system of braces which connect the first part and the second part to the frame through carriages and/or actuators, whereas the first part includes the first platform and the second part includes the second platform.

### State-of-the-art

To achieve high speeds and acceleration of manufacturing machines, above all machining ones, movable masses of machines have been minimized, new types of actuators have been developed and new structures of machines based on parallel kinematic structures have been designed.

Typically applied solutions derive motions of moveable parts of machines by deriving driving linear forces or driving rotational momenta between a stationary part of a machine and moveable carrying parts of a tool or a work-piece. These forces or momenta cause reactions of accelerating forces in stationary parts of a machine and make carrying parts, a bed and a base of the machine, vibrate.

And there is a contradiction between satisfactory toughness of carrying structures of moveable parts of a machine, which are not susceptible to vibrations caused by reactions of actuators then, and a low weight of these parts for achieving high speeds and accelerations.

In order to eliminate this contradiction, but also in order to eliminate vibrations of the stationary frame of the machine, there are solutions proposed to use new machine structures based on parallel kinematic structures. These solutions reduce weights of moveable parts of machines and increase the first own frequency of carrying machine parts which are less vibrated this way. This is caused by the fact that excitation by machine actuators is higher in lower frequencies than in higher frequencies. Nevertheless there is the essential problem mentioned above that reactions of the accelerating forces make carrying parts, the bed and the base of the machine, vibrate and moveable parts of the machines are accelerated by action forces of the actuators and the machine base together with Earth mass are accelerated by reaction forces which results in less relative acceleration between a tool and a work-piece. It is caused by the fact that this relative acceleration is determined by a ratio of actuator force and a weight of a movable machine part. Another and higher relative acceleration is achieved by using a floating principle of the machining machine structure.

Another solution is based on a so-called floating principle of a machining machine construction according to a patent (298615, PV2002-347, UV012114). In this solution a headstock with a machining tool and a machining machine table with a work-piece are movable towards a machine frame and towards one another. Force for the relative motion of the machining tool and the work-piece acts on both bodies of the headstock as well as on the table with the work-piece and not only on the headstock and the machining machine frame or on the table with the work-piece and the machining machine frame. Thanks to this both higher acceleration is achieved by the same force and dynamic forces in the direction of the motion of the headstock and/or the table with the work-piece are not transferred to the machining machine frame. This is very advantageous.

There is one problem that this solution according to the patent is only applicable for one degree of freedom usually formed by a movement axis of the linear motion of the headstock and/or the table with the work-piece. This movement axis is called a floating movement axis and this solution principle is called the floating principle. The use for more degrees of freedom formed by other movement axes is substantially problematic because this requires counterbalancing of moving masses of the second movement axis towards the first movement axis which is given by a typical sequence arrangement of movement axes of the machining machine.

Another problem is that this solution according to the patent does not transfer dynamic forces to the machining machine frame in the movement direction of the floating movement axis. However, in this solution reaction forces are transferred to the machining machine frame in the direction oblique (sideways) towards the movement direction. These forces may further make the machining machine frame vibrate.

The aim of this invention is to enable a solution of the above mentioned problems and its application for the floating principle in general for all six degrees of freedom and all movement axes of a machining machine and for elimination of all dynamic forces acting on the machining machine frame both in the movement direction and in directions oblique (sideways) towards the movement directions of the machining machine.

### Subject Matter of the Invention

The subject matter of a device for reduction of force transfer to a frame of two parts force-interacting on each other, the first part and the second part, in particular a tool and a work-piece when machining on a machining machine, connected movably to a common frame by means of parallel kinematic structures formed by platforms and a system of braces which connect the first part and the second part to the frame through carriages and/or actuators, whereas the first part includes the first platform and the second part includes the second platform, lies in the fact that both parts are connected to the frame by means of linear and/or rotary actuators acting between the both parts and the frame for adjustment of a relative position of the platforms, and/or there are linear and/or rotary actuators arranged between the both parts for adjustment of a relative position of the platforms, whereas each of these actuators is connected both to the first part and to the second part.

Each platform is connected moveably to the frame by means of fixed braces and push braces which are connected moveably to the frame through carriages or actuators with linear actuators, or by means of rotational braces which are connected to the frame rotationally through rotary actuators, whereas always one linear or rotary actuator of the first part forms a pair with the linear or rotary actuator of the second part and axes of these pairs of actuators are parallel or coaxial.

Between the platforms there are fixed and push braces and carriages or actuators fitted with linear actuators acting between the platforms and/or rotational braces fitted with rotary actuator acting between the platforms arranged.

The platforms can be additionally connected to the frame by additional braces with actuators and/or without actuators. In case of need the number of actuators for the fixed braces is higher than the number of degrees of freedom of individual parts. The linear actuators of one pair of carriages can be formed by a common working screw, whereas this pair is fitted with an absolutizing linear actuator. Alternatively, there is a carriage of the second part or of the first part arranged on the carriage of the first part or of the second part, whereas one carriage of the pair of actuators is fitted with an absolutizing actuator. In the case when the rotary actuator acts directly between the rotational braces of one of the parts and the other one of the parts, whereas this pair of the rotational braces is arranged on the frame, this is fitted with an absolutizing rotary actuator. In case of need the work-piece is arranged towards the platform and/or the tool is arranged towards the platform in a movable way with an actuator.

Within other embodiments at least one part with a work-piece forms a pair moving mutually against each other both with a tool-carrying part and with at least one other part carrying another tool.

At least one tool can form a support against deformation of the work-piece when machining with at least one tool.

Possible embodiments of braces of a "motor on a motor" type device are characterized by features given in Claims 13 to 20.

The advantage of the device according to this invention is a possibility to apply advantages of the floating principle in all degrees of freedom without a limitation and without complicated construction solutions of machining machines, whereas such machining machines feature minimal dynamic force effects onto the machine frame both in the direction of the motion of the actuators and sideways to them. Advantageously, "motor on a motor" type braces are then used which filter force from high frequency to low frequency. The machine frame is not exposed to reaction effects then. The advantage is that moveability, e.g. orientation represented by turning the platforms, of the parallel kinematic structures of the both parts is summed-up. There is an advantage of a possibility of cooperation of more parts with the floating principle, for example more tools for the same work-piece in all the required degrees of freedom without a limitation.

### Review of the Figures in the Drawing

In the attached figures there is a device for reduction of reaction effects according to the invention shown, where
- in Fig. 1 - Fig. 4: there are particular alternative embodiments
- in Fig.5: there are schematic alternative embodiments of connection of two parts force-interacting on each other to a frame,
- in Fig.6: there are schematic alternative connections of two parts force-interacting on each other,
- in Fig.7 and Fig.8: there is another alternative embodiment,
- in Fig.9 and Fig.10: there is a connection of a pair of spatial parallel kinematic structures of the device,
- in Fig. 11 to Fig.16: there are other alternative embodiments,
- in Fig.17: there is an alternative embodiment of connection of a pair of spatial parallel kinematic structures of the device,
- in Fig. 18 to Fig. 22: there are other alternative embodiments,
- in Fig. 23 to Fig.27: there are alternative embodiments of a certain type of push braces of the "motor on a motor" type device
- in Fig.28: there is an embodiment of a certain type of a rotational brace of the "motor on a motor" type device

### Examples of Embodiments of the Invention

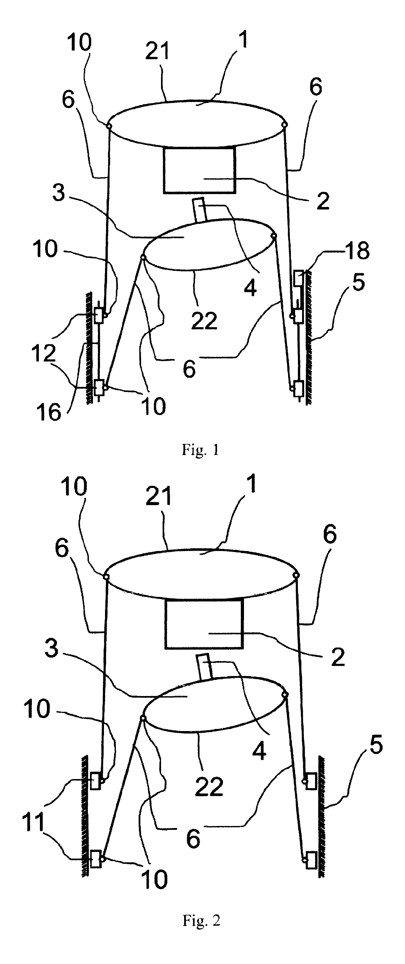

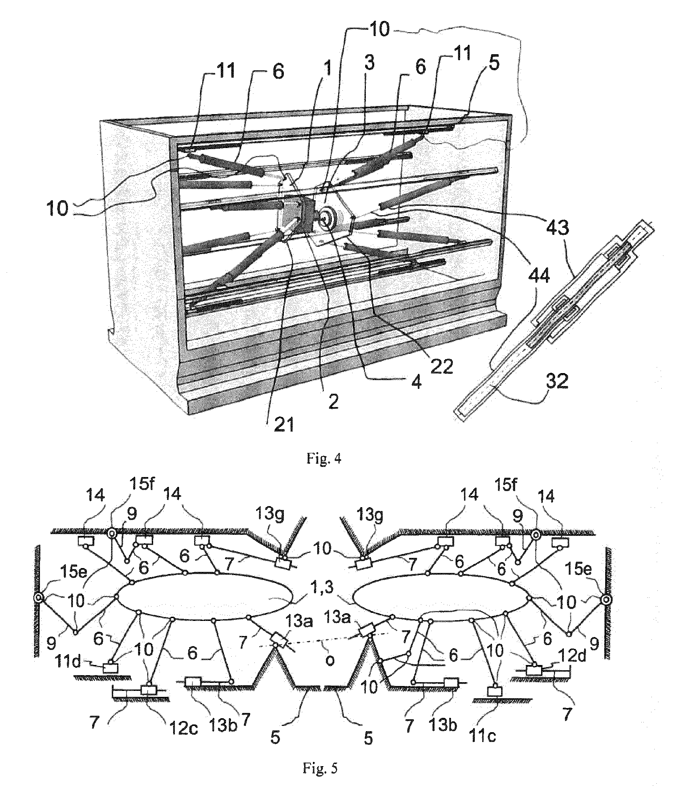

In Fig. 1 there is a basic arrangement of the device for reduction of reaction effects on a frame of two parts 21, 22 force-interacting on each other, which are connected to a frame 5. There are e.g. two parts 21, 22 of a machining machine where a tool 4 and a work-piece 2 are force-interacting on each other; the aim is to reduce their reaction effects on the frame 5 during the machining process. Thereinafter the particular parts 21 and 22 are described in relation with the machining machine. The part 21 of the machining machine carrying the work-piece 2 is formed by a parallel kinematic structure consisting of a platform 1 carrying the work-piece 2 and of braces 6. The platform 1 is suspended through rotational and/or spherical joints 10 on the fixed braces 6, which are attached through the rotational and/or spherical joints 10 to sliding carriages 12 with an adducting actuator moving along a guide on the frame 5. The part 22 of the machining machine carrying the tool 4 is formed by a parallel kinematic structure consisting of a platform 3 carrying the tool 4 and of the braces 6. The platform 3 is suspended through the rotational and/or spherical joints 10 on the fixed braces 6, which are also attached through the rotational and/or spherical joints 10 to the sliding carriages 12 with the adducting actuator moving along the guide on the frame 5. Each sliding carriage 12 with the adducting actuator of the part 21 of the machining machine always forms a pair with a respective sliding carriage 12 with the adducting actuator of the part 22 of the machining machine, and these pairs are connected by a common working screw 16. Axes of movement of the sliding carriages 12 with the adducting actuator are congruent (coaxial) in these pairs, formed by the axis of the common working screw 16. Therefore forces of actuators needed for a motion of the part 21 of the machining machine and the part 22 of the machining machine compensate each other and are not transferred to the frame 5. At the same time increase of acceleration of relative motion of the work-piece 2 and the tool 4 in comparison with a conventional arrangement occurs. Actuation by the sliding carriage 12 with the adducting actuator is realized for example using a rotary electric motor rotating the working screw in a fixed nut or using a rotary electric motor actuating through a belt a swivel nut on a fixed working screw. In a case that all the actuators were between the parts 21 and 22 and no actuator exerted force against the frame 5, then both of the parts 21 and 22 need to be positioned in an absolute way towards the frame. In the given arrangement this is performed with the help of an absolutizing linear actuator 18, which is for example realized using an electric linear motor, but it can be realized using a working screw as well. The schematic depiction in Fig. 1 represents both a planar arrangement of machining machines, where a motion in 2 or 3 degrees of freedom in a plane occurs, and a projection of a spatial arrangement for example of a HexaSlide with 6 linear actuators or an OctaSlide with 8 linear actuators, where a motion in 6 degrees of freedom in space occurs. A possible spatial arrangement with the use of HexaSlides with 6 actuators is evident in Fig. 4. The parallel kinematic structure of machining machines can have the same number of actuators as degrees of freedom or it can have more actuators than degrees of freedom.

In Fig. 2 there is an alternative embodiment of the embodiment in Fig. 1. Instead of the actuation by the sliding carriage 12 with the adducting actuator there are sliding carriages 11 with a linear actuator used, which form pairs again. Axes of movement of the sliding carriages 11 with the linear actuator are congruent (coaxial) in these pairs, formed by the axis of the common sliding guide always of a pair of the carriages 11 on the frame 5. Although forces of the actuators needed for a motion of the part 21 of the machining machine carrying the work-piece 2 and of the part 22 of the machining machine carrying the tool 4 get into the frame 5, they compensate each other in it at the same time. The actuation of the sliding carriage 11 with the linear actuator is realized using a linear electric motor, for example. As the carriages 11 with the linear actuators exert force directly towards the frame 5, absolutely positioning the parts 21 and 22 this way, in the given arrangement absolutizing actuators are not needed then.

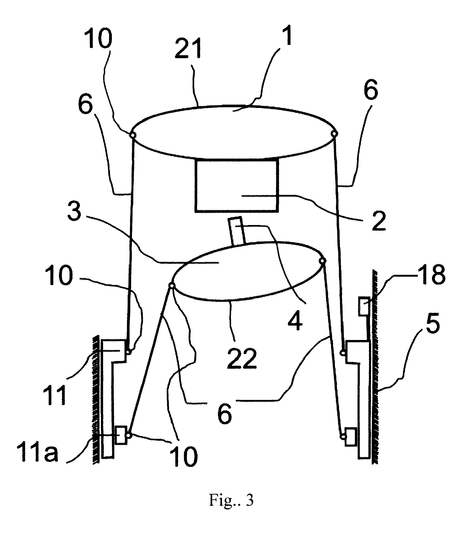

In Fig. 3 there is another alternative embodiment of the embodiment in Fig. 1. Instead of the actuation by the sliding carriage with the adducting actuator there are sliding carriages 11 and 11a with the linear actuator used, which form a pair of carriages with a common actuator. Forces of the actuators needed for a motion of the part 21 of the machining machine carrying the work-piece 2 and of the part 22 of the machining machine carrying the tool 4 also do not get into the frame 5 here, but they compensate each other. Within this embodiment this is achieved so that the sliding carriage 11a with the linear actuator moves on the second sliding carriage 11 with the linear actuator of the same pair of the carriages. The axes of movement of the sliding carriages 11 and 11a with the linear actuator are congruent (coaxial) in these pairs again, formed by the axis of the common sliding guide always of a pair of the carriages 11 and 11a. The actuation by the sliding carriage 11 with the linear actuator is realized using a linear electric motor, for example. Within this arrangement the sliding carriages 11 and 11a act merely on one another, thus the absolutizing linear actuator 18 needs to be used to adjust a position of the both parts 21 and 22 towards the frame 5.

In Fig. 4 there is an example of an embodiment according to the embodiment in Fig. 2 with HexaSlides in space. The HexaSlide is a parallel kinematic structure with a platform suspended on 6 fixed braces 6 attached to 6 carriages 11 with the linear actuator and/or carriages 12 with the adducting actuator positioned on the frame 5. The carriages 11 with the linear actuator are used here. As the carriages 11 with the linear actuators exert force directly towards the frame 5, absolutely positioning the parts 21 and 22 this way, absolutizing actuators are not needed in the given arrangement.

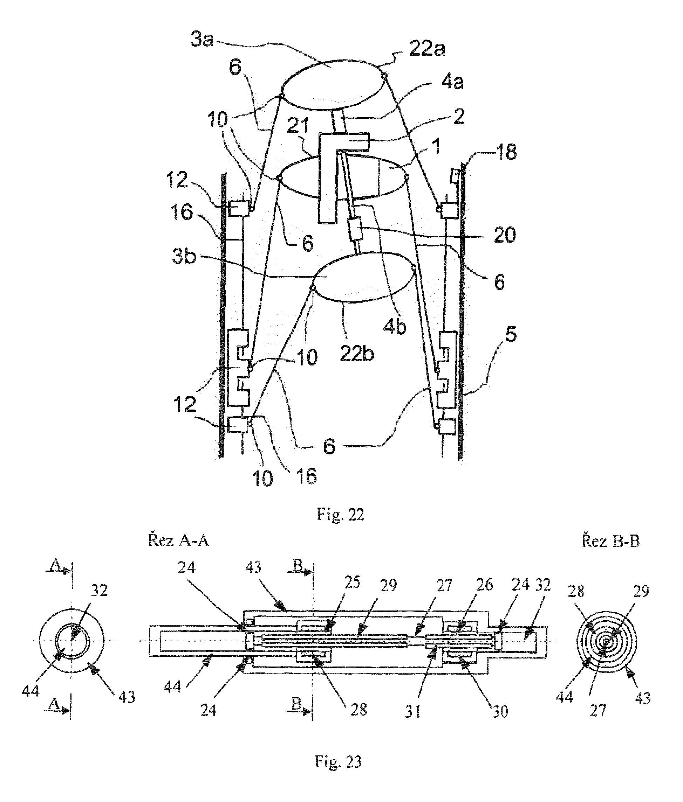

Here the fixed braces 6 are represented by two push braces 43, 44 with an inserted "motor on a motor" actuator according to the invention for reduction of forces in a structure and acting on the frame 5 of the HexaSlide parallel kinematic structures represented by the parts 21 and 22. The common axis 32 of the motors 25 and 26, as it is evident in Figs. 23-26, passes through the centres of the HexaSlide rotational joints 10 which are spherical joints here. This ensures a proper function of the brace so that it only transfers axial forces tension - compression and normal and frictional forces in the linear guides 24, or in similar sliding guides, are minimal, as shown in Figs. 23-24 again.

In Fig. 5 there are other possible embodiments with a number of various variants of braces and actuators, where the parts 21, 22 are attached to the frame 5, by means of sliding and/or rotary actuators acting between the parts 21, 22 and the frame 5, representing the device for reduction, or compensation, of effects of the parts 21 and 22 interacting on each other through the frame 5. The actuators forming the pairs are designated with reference characters 13a to 13f. Always one actuator 13a connected to the platform 1 forms a pair with the actuator 13a of the platform 3, the actuator 13b connected to the platform 1 forms a pair with the actuator 13b connected to the platform 3, as far as a pair of the actuators 13f for the platforms 1 and 3.

The platform 1, 3 is suspended through the rotational and/or spherical joints 10 on the fixed braces 6 which are attached to various types of carriages and actuators through the rotational and/or spherical joints 10. Aside from this, the platform 1, 3 is also suspended through the rotational and/or spherical joints 10 on the push braces 7 connected to the adducting actuators 13a attached to the frame 5 through the rotational and/or spherical joints 10. It is shown here that the adducting actuators 13a do not have actuator axes parallel and even the connecting line of the centres of the rotational and/or spherical joints 10, by which they are connected to the frame, is oblique and asymmetrical towards the rest of the actuators. This connecting line (marked "o" in the figure) determines the direction in which the forces from the adducting actuators 13a are compensating one another, and contrariwise they are not compensated in the direction perpendicular to the connecting line "o" of the force from the adducting actuators 13a. Within the solution with the adducting actuators 13a it is apparent that force effects acting on the parts 21 and 22 can be compensated to various extents with the help of the solution according to the invention. Not-compensated components of the force effects are reaction components to the frame 5. It is desirable so that axes of the particular pairs of the actuators are parallel and preferably coaxial but the axes of these pairs of the actuators can contain an arbitrary angle with each other. Forces in the direction of the axes of these pairs are compensated, forces perpendicular to these axes are not compensated by the floating principle but they can be compensated by "motor on a motor" type braces according to Figs.23-28. However, it will be an advantage if axes of all the pairs of the actuators are parallel. Further, the adducting actuators 13b attached fixedly to the frame 5, the carriages with the adducting actuators 12c and 12d, which, however, form a pair with the carriage 11a and 11d with the linear actuator, are depicted here as actuators. Various kinds of actuators can be used in pairs of actuators. There are rotary actuators 15e used through the rotational braces 9 connected to the fixed braces 6 through the rotational and/or spherical joints 10.

Further on several variants of actuation by means of the carriages 14 without an actuator are shown. A carriage without an actuator means that there is no actuator built-in to the carriage (a linear electric actuator, a working screw or a nut). However, the carriage 14 can be connected to another brace which is then connected to an actuator. In Fig. 5 the carriages 14 without an actuator are connected by means of the fixed braces 6 to the rotational braces 9 which are connected to the rotary actuators 15f on the frame 5. Other carriages 14 without an actuator are connected by means of the push braces 7 to the adducting actuators 13g which are connected to the frame 5 through the rotational and/or spherical joints 10. Compensation of forces of the actuators 13g is only partial as well as of the actuators 13a.

Beside this, Fig. 5 shows that the platform 1, 3 can be attached to the frame only by means of the carriages 14 without an actuator. Similarly it is shown that the platform 1, 3 can be attached to the frame only by means of the fixed braces 6 without an actuator through the rotational and/or spherical joints 10. While it is important that in a case of connection to the frame 5 by means of actuators the actuators form pairs, when being connected to the frame without an actuator, these connections can be in a necessary random number and not in pairs. Most of the actuators 13a-13f are depicted with parallel axes. The actuators in pairs need to be parallel and preferably coaxial, but the axes of the pairs of the actuators can be out of parallel to one another. For example the axis of the actuators 13b can be oblique to the axes of the actuators 12c-11c and/or to the axes of the actuators 11d-12d. The actuators of the carriages 11 with the linear actuator, of the carriages 12 with the adducting actuator and of the adducting actuators 13 can be e.g. linear electric actuators and/or working screws with a various drive. The rotary actuators 15 can be e.g. electric rotary motors or ring motors. The embodiment of the parallel kinematic structures shown in Fig. 5 can represent both a planar variant, where the number of the actuators is higher than the number of the degrees of freedom and these are redundant actuators, and a projection of a spatial variant without redundant actuators.

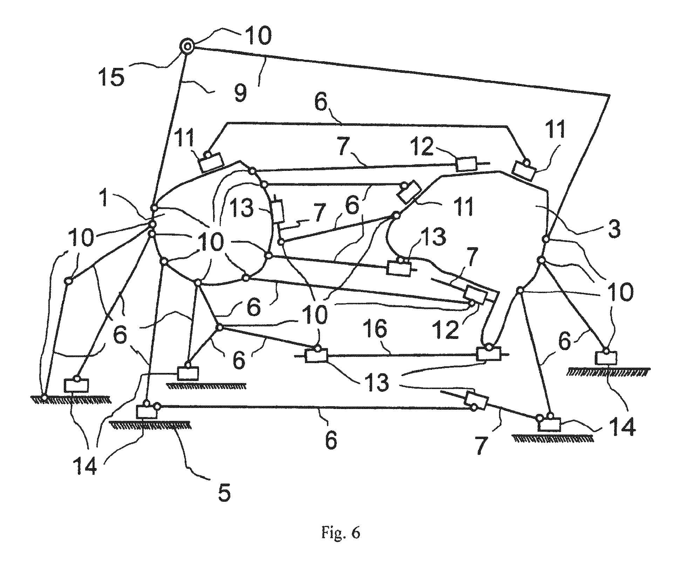

In Fig. 6 there are other possible embodiments with a number of different variants of braces and actuators, where the parts 21, 22 are not connected to the frame 5 by means of the linear and/or rotary actuators but the linear and/or rotary actuators are arranged between the both parts (21, 22), whereas each of these actuators is connected both to the part 21 and to the part 22. The other ones of the pair of the actuators, the absolutizing actuators (18, 19), are not depicted in this Figure.

These embodiments shown in Fig. 6 represent the device for reduction, or compensation, of effects of the parts 21 and 22 interacting on each other directly through interconnection between one another, the examples of them shown in this Figure being described thereinafter.

The platform 1, 3 is suspended on the fixed braces 6 through the rotational and/or spherical joints 10 and further on connected to the frame 5 through the carriages 14 without an actuator or through other fixed braces 6 and the rotational and/or spherical joints 10. Relative motion of the platforms 1, 3 is realized by the actuators acting between the both parts 21, 22. These actuators can be divided to the actuators which are arranged on the platform 1 and/or 3, and the actuators which are arranged outside the platform 1 or 3 either on the fixed brace 6 or on the carriage 14 without an actuator. The carriage 11 with the linear actuator is arranged on one of the platforms 1, 3 and is connected to the other one of the platforms 1, 3 by means of the fixed brace 6 through the rotational and/or spherical joints 10. The carriage 12 with the adducting actuator is arranged on one of the platforms 1, 3 and is connected to the other one of the platforms 1, 3 by means of the fixed brace 6 and/or the push brace 7 through the rotational and/or spherical joints 10. The adducting actuator 13 is connected fixedly to one of the platforms or through the rotational and/or spherical joints 10 and by the push brace 7 or by the push brace 7 and by the fixed brace 6 is connected through the rotational and/or spherical joints 10 to the other one of the platforms 1, 3.

In other variant the carriages 11 with the linear actuator can be arranged on the both platforms 1, 3 and interconnected by means of the fixed brace 6 through the rotational and/or spherical joints 10. The carriages 12 with the adducting actuator could be used this way as well. Between the platforms 1, 3 it is also possible to use the arranged rotary actuator 15 through the rotational brace 9 and the fixed brace 6.

Within another variant the actuators are arranged between the carriages 14 without actuators at the part 21 and the part 22 using the adducting actuator 13.

Another variant shows the use of two adducting actuators 13 connected by the common working screw 16. One adducting actuator 13 is connected through the body formed by three fixed braces 6 and arranged between the platform 1 and the carriage 14 without an actuator and the other actuator 13 is connected to the platform 3 which is arranged between the connection of the carriage 14 without an actuator by three fixed braces 6 forming the body and the platform 3. The axes of the carriages 14 without an actuator, by which the parts 21, 22 are connected to the frame 5, and the axes of the rotational joints 10, by which the parts 21, 22 are connected to the frame 5 through the fixed braces 6, can contain an arbitrary angle with one another. Reaction forces in these connections to the frame 5 can be compensated by "motor on a motor" type braces according to Figs. 23-28. Possible realizations of actuation are similar to Fig.5. The embodiment of the parallel kinematic structures shown in Fig. 6 can again represent both a planar variant, where the number of the actuators is higher than the number of the degrees of freedom and these are redundant actuators, and a projection of a spatial variant without redundant actuators.

Both embodiments of actuation of the relative motion of the platforms 1, 3 according to Fig. 5 and 6 can be combined. It is possible to have a pair of actuators arranged between the parts 21, 22 and the frame 5, as shown in Fig. 5, and, at the same time, an actuator arranged between the parts 21, 22, as shown in Fig. 6.

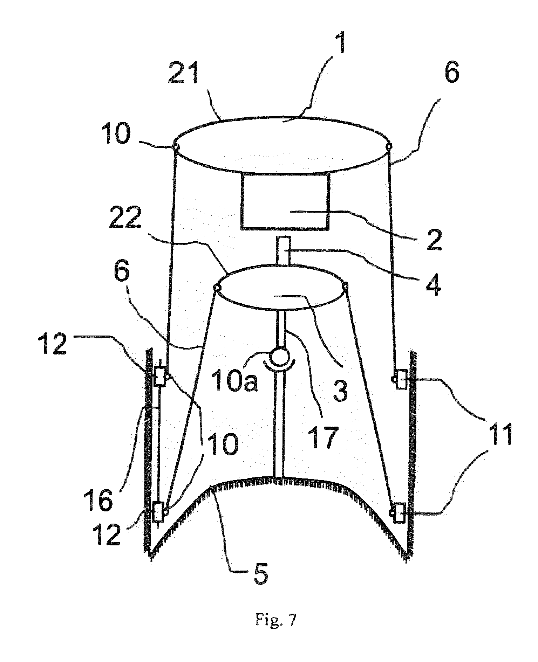

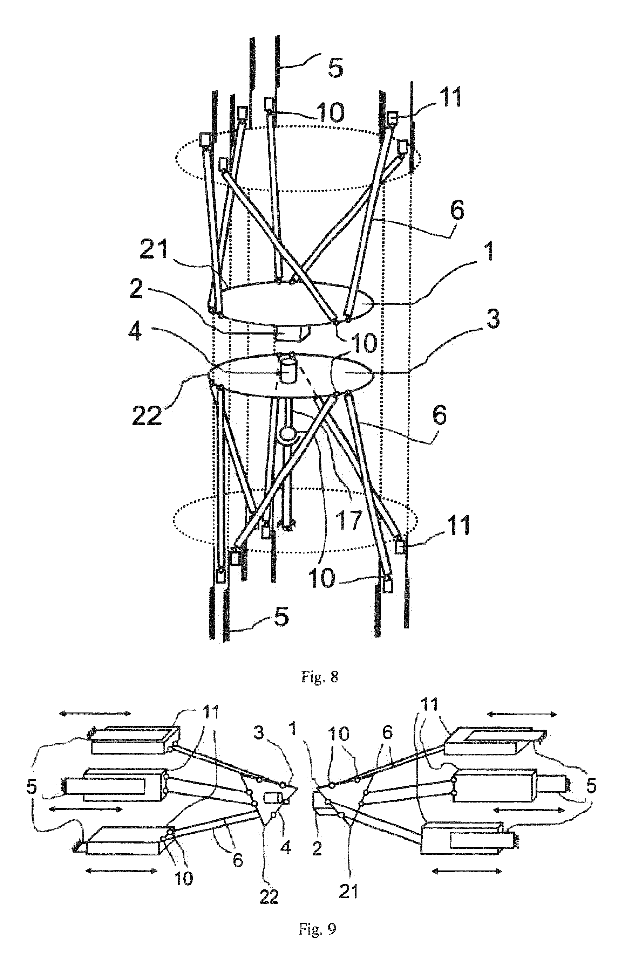

In Fig. 7 there is an embodiment with an additional brace 17 on one of the parts 21, 22 of the machining machine and connection of two different parallel kinematic structures in contrast to the aforementioned embodiments where there are always two consonant parallel kinematic structures. The part 21 is formed by the platform 1 carrying the work-piece 2; the platform is suspended through the rotational and/or spherical joints 10 on the fixed braces 6, which are attached through the rotational and/or spherical joints 10 to the sliding carriages 12 with the adducting actuator connected by a common working screw 16 and moving along the guide on the frame 5 on one side and to the sliding carriages 11 with the linear actuator moving along the guide on the frame 5. These actuators are always arranged in pairs. Besides these braces attached to the frame 5 by means of the carriages 11 and 12 with the actuators, the platform 3 of the part 22 is also suspended on the fixed additional brace 17 without an actuator and connected to the frame 5 through the rotational and/or spherical joint 10a. Forces in the additional brace 17 are not compensated by the floating principle. However, they are either neglectable or they are compensated by using a brace with an actuator, as shown in Figs. 23-27. These can be planar structures or a projection of spatial structures where the part 21 of the machining machine is formed by a HexaSlide parallel kinematic structure with 6 degrees of freedom and the part 22 of the machining machine is formed by a HexaSphere parallel kinematic structure with 3 degrees of freedom of which 2 degrees of freedom are utilized. Schematic depiction of this spatial variant is shown in Fig. 8. The HexaSphere parallel kinematic structure is described e.g. in CZ 302911 document.

In Fig. 8 there is a spatial depiction of the embodiment of the connection of the HexaSlide spatial parallel kinematic structures for the part 21 and the HexaSphere for the part 22, similarly to the Fig. 7. For actuation only the sliding carriages 11 with the linear actuator moving along the guide on the frame 5 are used. In each guide there is always a pair of the sliding carriages 11 guided, one carriage belonging to the part 21 and one carriage belonging to the part 22. All the joints 10 are spherical joints.

In Fig. 9 there is a schematic depiction of the connection of a pair of spatial parallel kinematic structures of the same SlidingDelta type, each with 3 degrees of freedom, formed by movement in a direction of Cartesian axes x, y, z, realizing the part 21 of the machining machine with the work-piece 2 and the part 22 of the machining machine with the tool 4. The SlidingDelta parallel kinematic structure consist of the platform 1 for the part 21, which is through the spherical joints 10 suspended on three pairs of the fixed braces 6 arranged to three parallelograms attached through the spherical joints 10 to the sliding carriages 11 with linear actuators. The axes of movement of the sliding carriages 11 are parallel. Thus it is ensured that the platform 1 only performs linear motion and does not change its orientation towards the sliding carriages 11 during the motion. The SlidingDelta parallel kinematic structure with the platform 3 for the part 22 is arranged in a similar way. Each sliding carriage 11 with the linear actuator of the part 21 forms a pair with any linear carriage 11 with the linear actuator of the part 22 so that it is arranged in a coaxial way with it. In this case the linear actuators of the sliding carriages 11 are formed by electric linear actuators the pairs of which have congruent axes of the fixed guides of the electric linear motors. However, the linear actuators of the sliding carriages 11 can be formed by an actuator with a ball screw, then coaxiality would be realized by the congruent axis of these working screws. Then three coaxial pairs of the carriages 11 with the linear actuators realize the linear motion of the platforms 1 and 3 in three degrees of freedom so that the needed relative linear motion of the tool 4 and the work-piece 2 is carried out. Instead of the sliding carriages 11 with the linear actuators the sliding carriages 12 with the adducting actuator and the common working screws 16 can be used alternatively, in this case the use of the absolutizing actuator 18 would be necessary though.

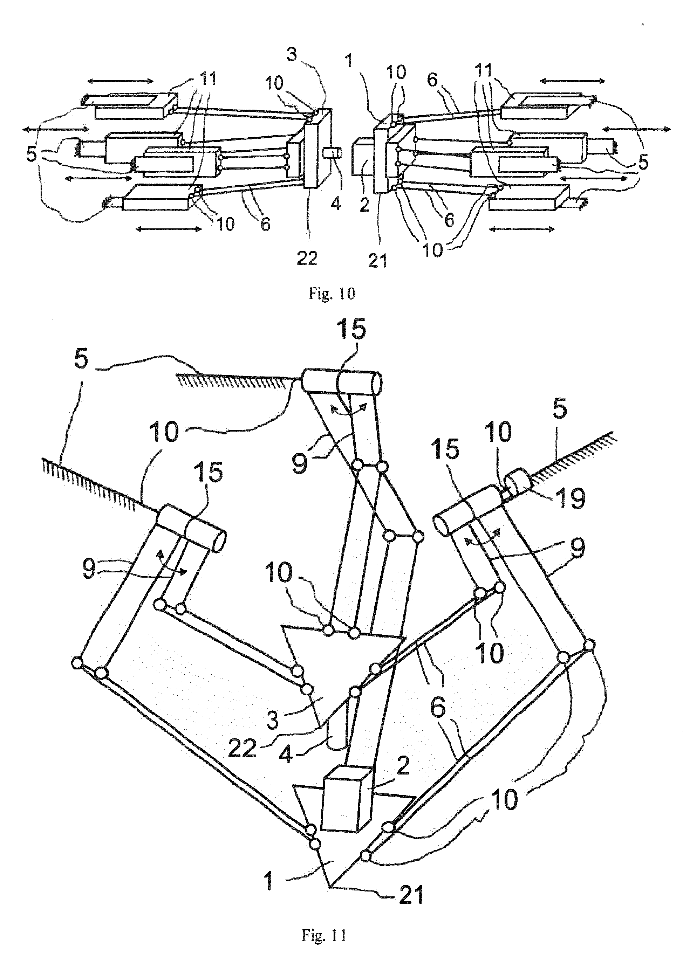

In Fig. 10 there is a schematic depiction of the connection of spatial parallel kinematic structures of the same redundant SlidingDelta type with 3 degrees of freedom formed by movement in a direction of Cartesian axes x, y, z, controlling realizing the part 21 of the machining machine with the work-piece 2 and the part 22 of the machining machine with the tool 4. This is an analogical embodiment to that one in Fig. 8, but with the use of the redundant actuators which are 4 for 3 degrees of freedom. The use of the redundant actuators enhances dexterity, rigidity and structure dynamics significantly. The redundant SlidingDelta parallel kinematic structure consists of the platform 1 for the part 21, which is through the spherical joints 10 suspended on four pairs of the fixed braces 6 arranged to four parallelograms attached through the spherical joints 10 to the sliding carriages 11 with linear actuators. The axes of movement of the sliding carriages 11 are parallel which ensures just the linear motion of the platform 1 towards the carriages without the orientation change. The SlidingDelta parallel kinematic structure with the platform 3 for the part 22 is arranged in a similar way. Again each sliding carriage 11 with the linear actuator of the part 21 forms a pair with some sliding carriage 11 with the linear actuator of the part 22 so that it is arranged in a coaxial way with it. Also in this case the linear actuators of the sliding carriages 11 are formed by electric linear actuators the pairs of which have congruent axes of the fixed guides of the electric linear motors. Then four coaxial pairs of the carriages 11 with the linear actuators realize the linear motion of the platforms 1 and 3 in three degrees of freedom so that the needed relative linear motion of the tool 4 and the work-piece 2 is carried out, only control of the redundant actuators requires a more complicated control.

In Fig. 11 there is a schematic depiction of the connection of spatial parallel kinematic structures of the same SlidingDelta type with 3 degrees of freedom formed by movements in a direction of Cartesian axes x, y, z, realizing the part 21 of the machining machine with the work-piece 2 and the part 22 of the machining machine with the tool 4. The Delta parallel kinematic structure consists of the platform 1 for the part 21, which is through the spherical joints 10 suspended on three pairs of the fixed braces 6 arranged to three parallelograms attached through the spherical joints 10 to the rotational braces 9, the pairs of which are driven towards each other by three rotary actuators 15. These rotary actuators 15 can rotate freely in the rotational joints 10 towards the frame 5, similarly as within the embodiment in Fig. 1, where the carriages 12 are sliding along the frame 5 freely. Therefore it is necessary to position the position of the rotational braces 9 towards the frame 5 in an absolute way. This is performed with the help of the absolutizing rotary actuator 19.

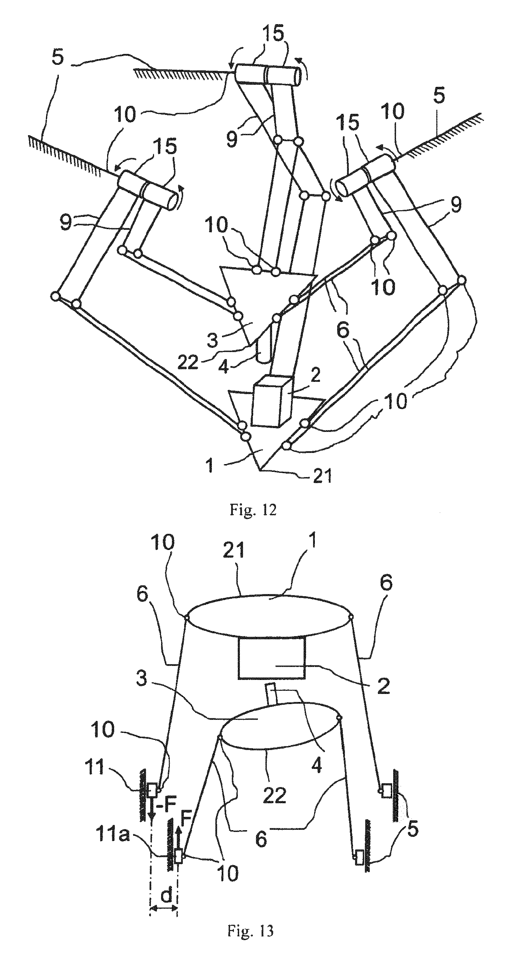

In Fig. 12 there is a schematic depiction of an alternative embodiment of the embodiment in Fig. 11. Instead of one rotary actuator 15 acting between the rotational braces 9 a pair of the rotary actuators 15 is always used on each rotational joint 10 towards the frame 5. These rotary actuators 15 act through their momenta directly on the frame 5, they are coaxial and their momenta compensate one another, but on the frame 5. Therefore absolutizing actuators are not needed.

In Fig. 13 there is a schematic depiction of an alternative embodiment of the embodiment in Fig. 2 where pairs of linear actuators are parallel but they do not have a congruent axis, so they are not coaxial. Forces F and -F from the linear actuator 11a and 11 compensate one another but their pairs of forces create Fd momentum. This momentum is not compensated and it must be absorbed by the frame 5. Compensation of the main forces F has been performed and at a small abaxiality, which is a value of d here, the frame will not be stressed very much. This embodiment also corresponds with a real design where manufacturing inaccuracies always cause some, however small, value of d dislocation of axes of the actuators 11.

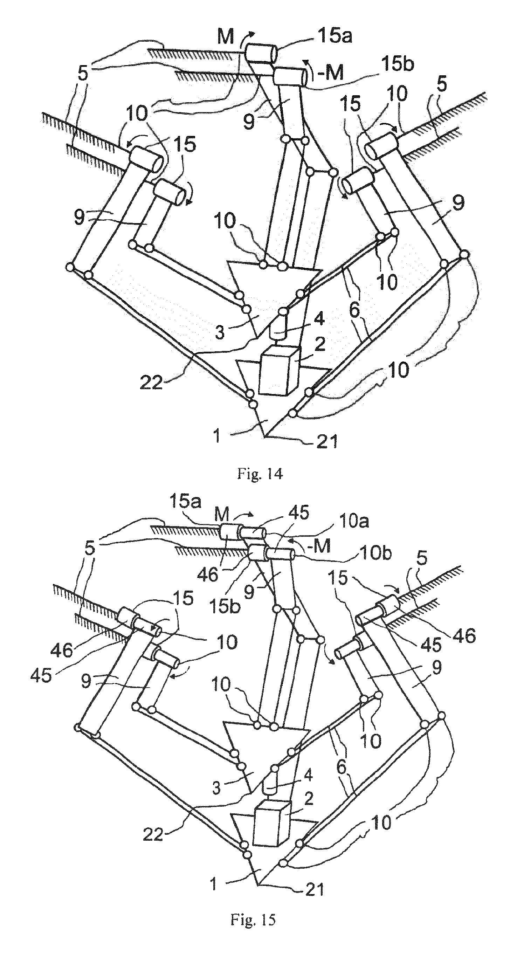

In Fig. 14 there is a schematic depiction of an alternative embodiment of the embodiment in Fig. 12 where pairs of rotary actuators are parallel but they do not have a congruent axis, so they are not coaxial. Momenta M and -M from the rotary actuators 15a and 15b fully compensate each other but at first they have to enter the frame 5 and to propagate between axes 15a and 15b inside the frame 5. Thus the frame 5 can be excited by impact from the momenta. If a distance of the axes 15a and 15b is small, the frame 5 will not be stressed very much. This is an analogy of the embodiment in Fig. 13 for the rotary actuators 15.

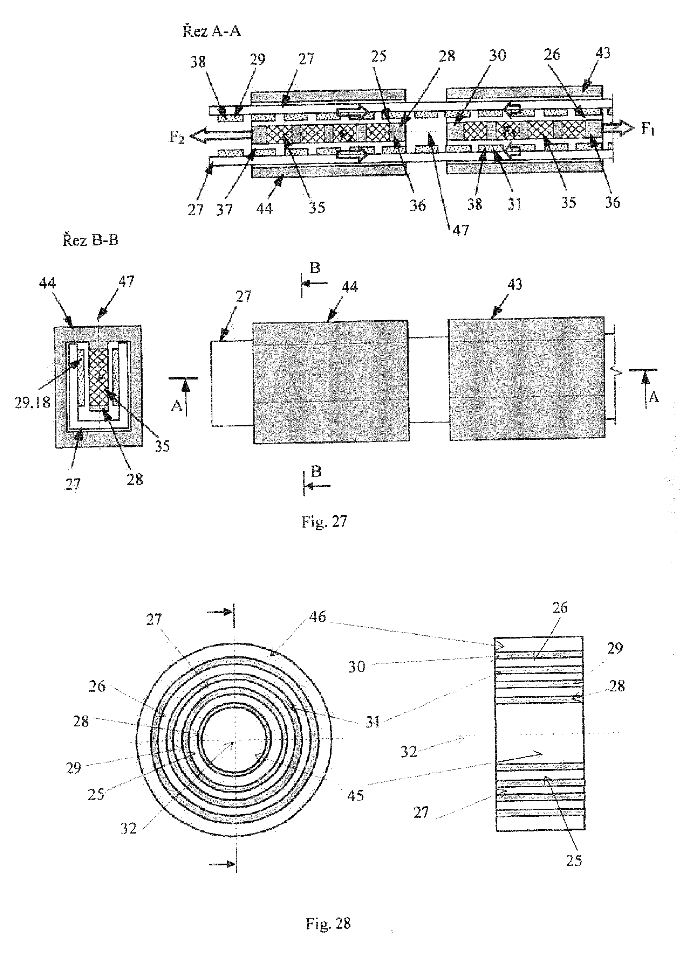

In Fig. 15 there is a schematic depiction of an alternative embodiment of the embodiment according to Fig. 14 where the rotary actuators 15 are designed as rotational braces of "the motor 45 on the motor 46" type, as shown below in Fig. 28. The solution in Fig. 15 results in decrease of forces in the construction of the Delta parallel kinematic structures of the parts 21 and 22 to the frame 5.

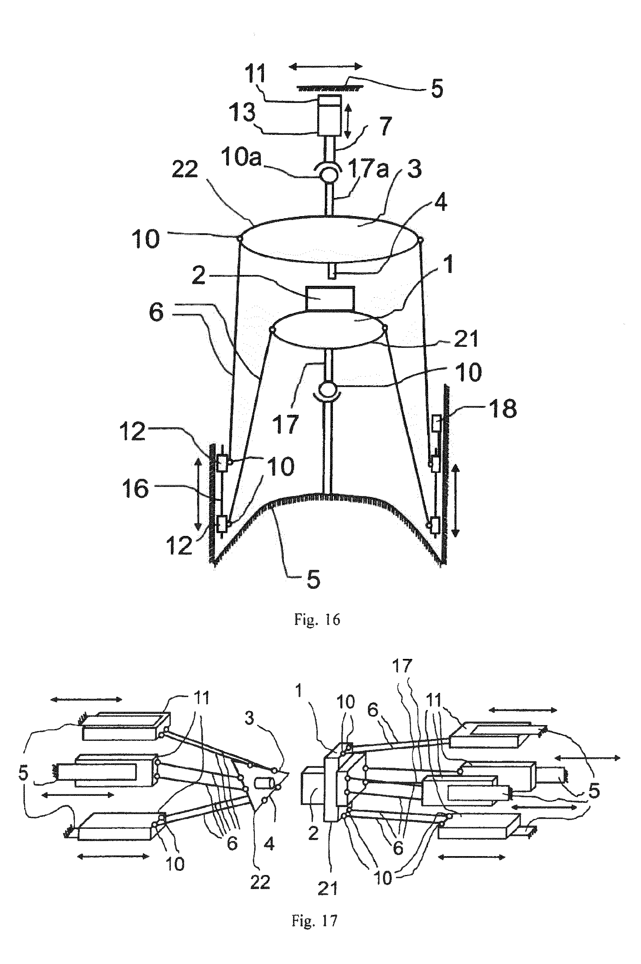

In Fig. 16 there is a planar projection schematic depiction of an alternative embodiment of the embodiment in Fig. 7 where almost congruent spatial parallel kinematic structures HexaSphere are used, but they differ by a fact that the fixed additional brace 17 without an actuator is in the upper structure, at the part 22, replaced by the fixed additional brace 17a which is connected through the spherical joint 10a to the push brace 7 controlled by the adducting actuator 13 and two linear actuators 11, of which only one is depicted in the projection (marked with an arrow). The lower structure, belonging to the part 21, performs swiveling of the work-piece 2 and the upper structure, belonging to the part 22, performs, aside from swiveling, also a movement in 3 degrees of freedom created by movements in the direction of the Cartesian axes x, y, z, and realized by the movement of the push brace 7 by the adducting actuator 13 and by two sliding carriages 11 with linear actuators, of which there is only a projection of one linear carriage 11 with a linear actuator in Fig. 16. The linear actuators 11 and 13 do not have a pair and their forces are not compensated. If the movements are slow, excitation of the frame 5 will not be very high. These are hybrid parallel kinematic structures formed by a combination of braces with actuators and braces without actuators. The adducting actuator 13 can be realized e.g. by a telescopic working screw and the linear actuators 11 can be realized e.g. by working screws.

In Fig. 17 there is a schematic depiction of an alternative embodiment of the embodiment in Figs. 9 and 10. The connection of the Sliding Delta spatial parallel kinematic structure is used at the part 22 and the redundant Sliding Delta spatial parallel kinematic structure is used at the part 21. The Sliding Delta has 3 actuators, the redundant Sliding Delta has 4 actuators. Either 3 actuators of the both spatial parallel kinematic structures are arranged in pairs coaxially as in the embodiments mentioned above (in Fig. 17 these would be the actuators on the carriages 11 attached to the fixed braces 6) and the fourth actuator is only parallel with the rest ones (in Fig. 17 this would be the actuator on the carriage 11 attached on the additional braces 17) or all the actuators only have parallel axes, but not coaxial (in Fig. 17 these would be all the actuators on the carriages 11 indiscriminately). The redundant actuators decompose the motion between more actuators than a minimum necessary number given by the number of degrees of freedom. Then the forces in the direction of the actuators are compensated as a whole in a sum, but there are momenta originating from the pairs of forces which are not compensated. These non-compensated momenta are not big at small distances between axes, though. This example shows a possibility to combine various parallel kinematic structures with a various number of actuators. This possibility could be applied for the alternative embodiment of the embodiment in Figs. 7 and 8 where, instead of the HexaSlide parallel kinematic structure with 6 actuators, there would be the OctaSlide redundant parallel kinematic structure with 8 actuators used, which has a better dexterity and other mechanical properties for realization of the linear motions of the work-piece 2. The OctaSlide is a parallel kinematic structure with a platform suspended on 8 fixed braces 6 attached to 8 carriages 11 with the linear actuator and/or carriages 12 with the adducting actuator positioned on the frame 5. This is a redundantly driven parallel kinematic structure which has more actuators (8 actuators) than degrees of freedom (6 degrees of freedom).

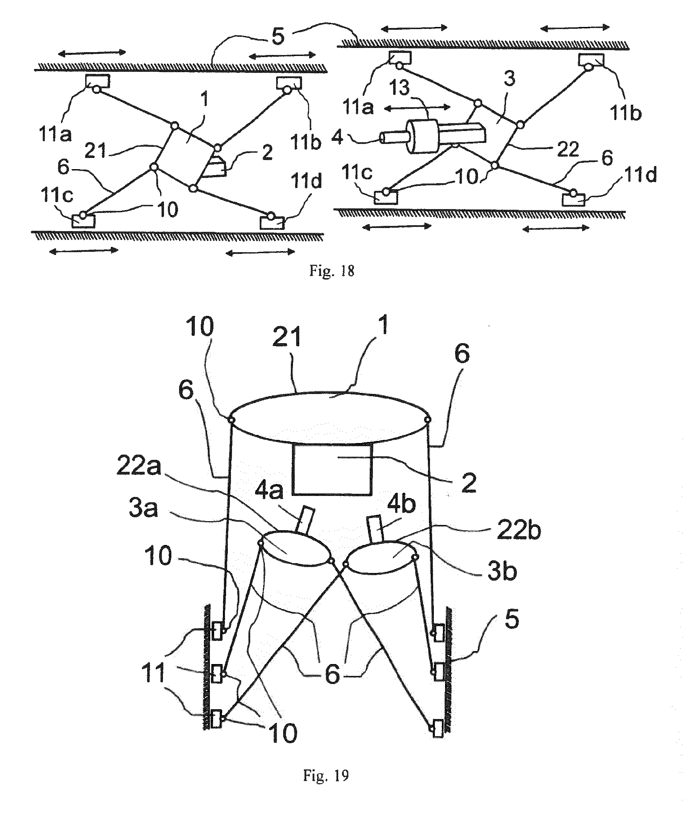

In Fig. 18 there is a schematic depiction of a different embodiment of the connection of two parallel kinematic structures. The part 21 of the machining machine carrying the work-piece 2 is a Sliding Star redundant parallel kinematic structure and the part 22 of the machining machine carrying the tool 4 is also a hybrid redundant parallel kinematic structure based on the Sliding Star.

The SlidingStar planar redundant parallel kinematic structure of the part 21 of the machining machine is formed by the platform 1 carrying the work-piece 2; the platform 1 is through the rotational joints 10 suspended on the fixed braces 6 attached through other rotational joints 10 to the sliding carriages 11a to 11d with linear actuators moving along the frame 5 in a parallel way. The SlidingStar parallel kinematic structure has 3 degrees of freedom, 4 linear actuators, but it only uses 2 degrees of freedom of linear motions in a plane because turning the platform according to Fig. 18 provides enhanced rigidity. Similarly the part 22 of the machining machine is arranged where on the platform 3 there is a quill 4 carrying a tool placed which is formed by the carriage with the adducting actuator 13. Four actuators for movement in the direction of two axes are arranged in pairs of the sliding carriages 11a, 11b, 11c, 11d. Their forces are fully compensated, but these forces usually are not coaxial, and so momenta of their force pairs have to be absorbed in the frame 5. Force of the adducting actuator 13 of the carriage in the quill 4 is not compensated by the floating principle, but only by the "motor on a motor" brace. This is an example where basic movements of the linear motion are fully compensated by the floating principle, but in-feed motions and possible swivel of the tool are not compensated by the floating principle. The linear actuators of the carriages 11a-11d are e.g. formed by linear electric drives and the adducting actuator 13 by a telescopic working screw.

In Fig. 19 there is a schematic depiction of an embodiment of cooperation of one part 21 of the machining machine with the work-piece 2 on the platform 1 with two parts 22a and 22b of the machining machine with the tools 4a and 4b on the platforms 3a and 3b, based on the embodiment in Fig. 2. The sliding carriages 11 with the linear actuators are arranged coaxially on the frame 5 and so all their forces and momenta are fully compensated. These can be planar parallel kinematic structures or a projection of spatial parallel kinematic structures, for example the HexaSlide. Cooperation of many machines with the floating principle is possible this way.

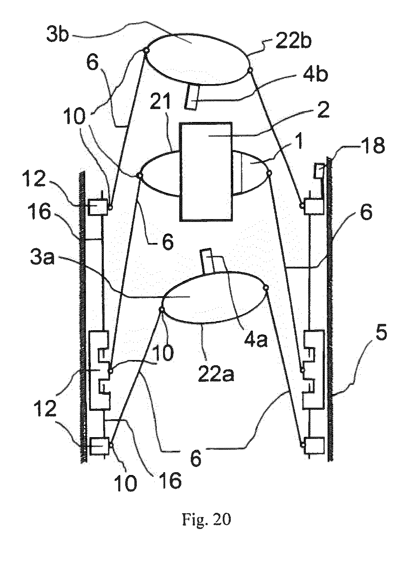

In Fig. 20 there is a schematic depiction of another embodiment of the cooperation of one part 21 of the machining machine carrying the work-piece 2 with two parts 22a and 22b of the machining machine, where the part 22a is carrying the tool 4a and the part 22b is carrying the tool 4b. This is a different embodiment of the embodiment in Fig. 19 based on the embodiment in Fig. 1. The carriages 12 with the adducting actuators connected by the common working screw 16 are used as actuators. Therefore the absolutizing linear actuator 18 has to be used. These can be planar parallel kinematic structures again or a projection of spatial parallel kinematic structures, for example the HexaSlide. Cooperation of many machines with the floating principle is possible this way.

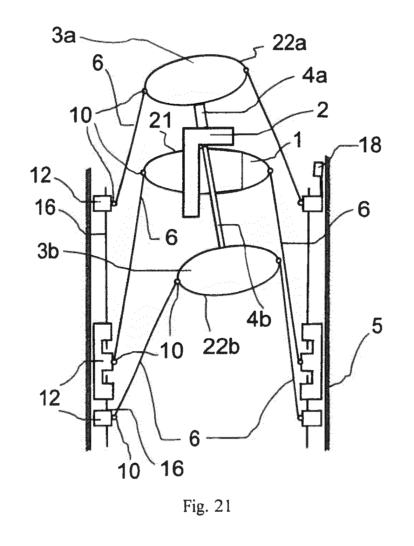

In Fig. 21 there is a schematic depiction of another embodiment of the cooperation of many machines with the floating principle. One part 21 of the machining machine carrying the work-piece 2, which is being deformed by working forces during machining, with two parts 22a and 22b of the machining machine where the part 22a is carrying the tool 4a for machining and the part 22b is carrying the tool 4b for a support of the work-piece 2 during machining. This support 4b always holds a position against the force from the machining tool 4a, thus compensating the deformation of the work-piece 2 during machining. This is an embodiment based on the embodiment in Fig. 20. The carriages 12 with the adducting actuators connected by the common working screw 16 are used as actuators. Therefore the absolutizing linear actuator 18 has to be used. These can be planar parallel kinematic structures again or a projection of spatial parallel kinematic structures, for example the HexaSlide.

In Fig. 22 there is a schematic depiction of an alternative embodiment of the embodiment in Fig. 21. Here the tool 4b for the support of the work-piece 2 during machining is fitted with the actuator 20 in order to increase toughness of the machined work-piece 2. This actuator acts locally on the position of the support 4b and reduces deformation of the machined work-piece 2.

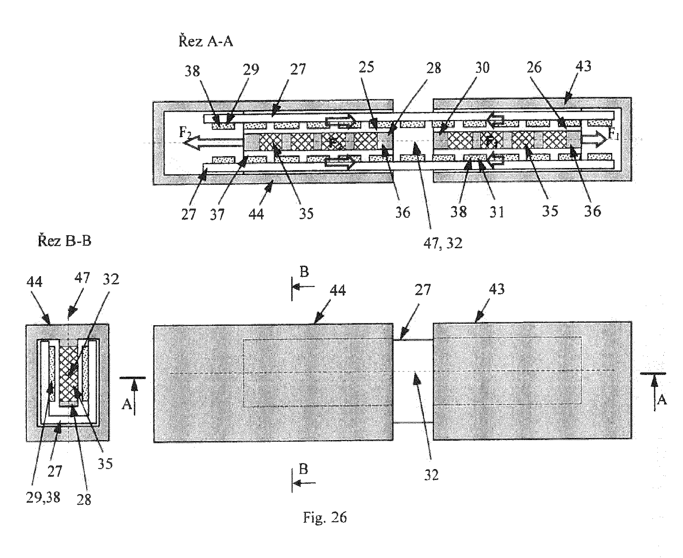

In Fig. 23 there is a depiction of a possible solution of the fixed brace 6 and/or the push brace 7 and/or the additional brace 17 (the fixed brace 6 is shown in the embodiment according to Fig. 4), where a static part 43 of the brace is fitted with a primary part 30 of a transformation linear electric motor 26 generating a force F1 (Fig. 26), an intermediate mass 27 is cylindrical and it is fitted with a secondary part 29 of a main linear electric motor 25 and a secondary part 31 of the transformation linear electric motor 26, and a moveable part 44 of the brace is fitted with a primary part 28 of the main linear electric motor 25 generating a force F2 (Fig. 26). Both the motors 25 and 26 have the common axis 32 and they are coaxial then. This coaxial arrangement prevents origination of an overturning moment in the brace. The guide of the intermediate mass 27 in the static part 43 of the brace and in the movable part 44 of the brace is designed as linear guides 24. The guide of the movable part 44 in the static part 43 of the brace is also designed as linear guides 24. Thanks to coaxiality of both the motors 25 and 26, the normal forces in the guides are neutral or minimal, thus the solution without a linear guide can be used. Guiding is then ensured by a sliding contact of surfaces with a possible lubricant between the intermediate mass 27 and the static part 43, between the intermediate mass 27 and the moveable part 44 and between the static part 43 and the moveable part 44 of the brace. This is an embodiment of the brace of "motor on a motor" type, as the brace is fitted with two linear electric motors 25 and 26 positioned one on top of the other.

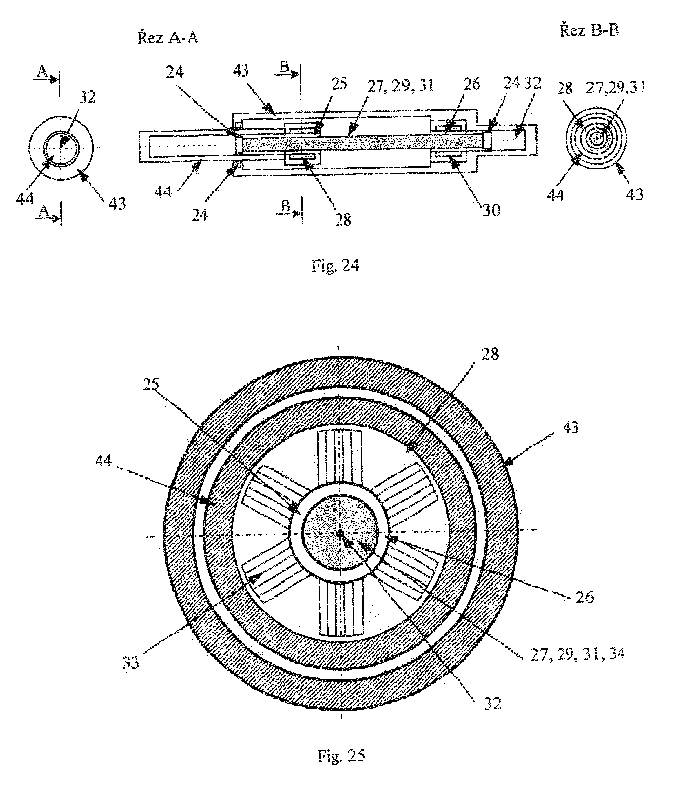

Fig. 24 shows another possible solution of the fixed brace 6 and/or the push brace 7 and/or the additional brace 17. This is a variant of the solution in Fig. 23, where the intermediate mass 27 is formed by the common secondary part of the motor 25 and the motor 26 in this Figure. For example, this can be achieved so that the intermediate mass 27 according to Fig. 23 is just formed by permanent magnets here. Such a solution is very compact and reduces a built-on area.

In Fig. 25 there is a depiction of a section of a possible solution of an axially symmetrical arrangement of the fixed brace 6 and/or the push brace 7 and/or the additional brace 17. Coils 33 of the primary part 28 of the linear tubular electric motor 25 and a core 34 of the secondary part 29 of the linear tubular electric motor 25 are arranged axially symmetrically around a common axis 32. The core 34 of the secondary part 29 of the linear tubular electric motor 25 is integrated with the intermediate mass 27 and the secondary part 31 of the linear tubular electric motor 26. The static part 43 and the moveable part 44 of the brace is arranged around the common axis 32 axially symmetrically, too. This axially symmetrical arrangement reduces substantially passive resistances in relative motion of the motors in the brace and reduces the necessary built-on area of the whole structure.

Fig. 26 shows another possible solution of an axially symmetrical arrangement of the fixed brace 6 and/or the push brace 7 and/or the additional brace 17 using a linear electric motor without iron. Its advantage is a neutral force of attraction enabling a simple axially symmetrical construction. The static part 43 of the brace is fitted again with the primary part 30 of the transformation linear electric motor 26 generating the force F1, the intermediate mass 27 is U-shaped and it is formed by the common secondary part 29 of the main linear electric motor 25 generating the force F2 and by the secondary part 31 of the transformation linear electric motor 26 generating the force F1 and carrying the permanent magnets 38, and the moveable part 44 of the brace is fitted with the primary part 28 of the main linear electric motor 25 generating the force F2. Both the motors 25 and 26 are formed by winding of the primary parts 35 and non-magnetic material 36 and they generate forces by acting on the permanent magnets 38 through an air gap 37. Both the motors 25 and 26 have the common axis 32 coplanar in symmetry 47 and they are coaxial then. This coaxial arrangement prevents origination of an overturning moment in the brace. In order to fully utilize this advantage, though, it is necessary that the static part 43 and the moveable part 44 is attached to the construction or the equipment being connected in such a way that the common axis 32 passes through the centres of the connecting joints, e.g. the spherical joints 10.

Fig. 27 shows another possible solution of a planar symmetrical arrangement of the fixed brace 6 and/or the push brace 7 and/or the additional brace 17 using a linear electric motor without iron. Its advantage is a neutral force of attraction enabling a simple planar symmetrical construction. This is a variant of the solution in Fig. 26, where the main linear electric motor 25 generating the force F2 and the transformation linear electric motor 26 generating the force F1 are symmetrically arranged around the U-shaped intermediate mass 27 towards its plane of symmetry 47. Although this planar symmetrical arrangement does not fully prevent origination of the overturning moment in the brace, it is simple to be built and assembled especially with regard to observance of the brace attachment coaxiality towards the structures or equipments being connected. Again the entire solution is compact and reduces the built-on area.

Fig. 28 shows a possible solution of the rotational brace 9 (the rotational brace 9 is shown in the embodiment according to Fig. 15), where a stator 46 of the brace is fitted with the primary part 30 of the transformation linear electric motor 26, the intermediate mass 27 is tubular and it is formed by the secondary part 29 of the main linear electric motor 25 and by the secondary part 31 of the motor 26 and a rotor 45 of the brace is fitted with the primary part 28 of the motor 25. Both the motors 25 and 26 have the common axis 32 and they are coaxial then. This is an embodiment of the rotational brace of the "motor on a motor" type.

The parallel kinematic structures with more actuators than degrees of freedom are used with advantage.

In all the embodiments described above there can only be substantially parallel axes instead of parallel axes and/or only substantially coaxial axes instead of coaxial axes. Such deviations can occur as a result of manufacturing deviations. Control of movement of machining machines is performed by a computer.

## Claims

1. A device for reduction of force transfer to a frame (5) consisting of two parts (21, 22) force-interacting on each other, the first part (21) and the second part (22), in particular a tool and a work-piece when machining on a machining machine, connected moveably to a common frame (5) by means of parallel kinematic structures formed by platforms (1, 3) and a system of braces (6, 7, 9, 17) which connect the first part (21) to the frame (5) and the second part (22) to the frame (5) through carriages (11, 12, 14) and/or actuators (13, 15, 16), whereas the first part (21) includes the first platform (1) and the second part (22) includes the second platform (3), **characterized in that** the both parts (21, 22) are connected to the frame (5) by means of linear and/or rotary actuators acting between the parts (21, 22) and the frame (5) for adjustment of a relative position of the platforms, and/or there are linear and/or rotary actuators arranged between the both parts for adjustment of a relative position of the platforms (1) and (3), and/or linear and/or rotary actuators for adjustment of a relative position of the platforms (1) and (3) are arranged between the both parts (21, 22), whereas each of these actuators is connected both to the part (21) and to the part (22).

2. The device for reduction of force transfer to a frame according to claim 1 **characterized in that** each platform (1, 3) is connected moveably to the frame (5) by means of fixed braces (6) and push braces (7), which are connected moveably to the frame (5) through the carriages (11, 12, 14) or the actuators (13, 16) with the linear actuators, or by means of rotational braces (9) which are connected to the frame (5) rotationally through rotary actuators (15), whereas always one linear or rotary actuator of the first part (21) forms a pair with the linear or rotary actuator of the second part (22) and axes of these pairs of actuators are parallel or coaxial.

3. The device for reduction of force transfer to a frame according to some of the aforementioned claims **characterized in that** between the platforms (1, 3) there are the fixed and push braces (6, 7) and the carriages (11, 12, 14) or the actuators (13, 16) fitted with the linear actuators acting between the platforms (1, 3) and/or the rotational braces (9) fitted with the rotary actuator (15) acting between the platforms (1, 3) arranged.

4. The device for reduction of force transfer to a frame according to some of the aforementioned claims **characterized in that** the platforms (1, 3) are additionally attached to the frame (5) through the additional braces (17) with actuators and/or without actuators.

5. The device for reduction of force transfer to a frame according to some of the aforementioned claims **characterized in that** the number of actuators for the fixed braces (6) is higher than the number of degrees of freedom of the parts (21, 22).

6. The device for reduction of reaction effects of two force-interacting parts according to some of the aforementioned claims **characterized in that** the linear actuators of one of pairs of the carriages are formed by a common working screw (16), whereas this pair is fitted with an absolutizing linear actuator (18).

7. The device for reduction of force transfer to a frame according to some of the aforementioned claims **characterized in that** the carriage (11a) of the second part (22) or of the first part (21) is arranged on the carriage (11) of the first part (21) or of the second part (22).

8. The device for reduction of force transfer to a frame according to claim 7, **characterized in that** the carriage (11) is fitted with the absolutizing linear actuator (18).

9. The device for reduction of force transfer to a frame according to some of the aforementioned claims **characterized in that** the rotary actuator (15) acts directly between the rotational braces (9) of one of the parts (21, 22) and of the second parts (21, 22), whereas this pair of the rotational braces is arranged on the frame (5) and fitted with the absolutizing rotary actuator (19).

10. The device for reduction of force transfer to a frame according to some of the aforementioned claims **characterized in that** the work-piece (2) towards the platform (1) and/or the tool (4) towards the platform (3) is arranged in a movable way with an actuator.

11. The device for reduction of force transfer to a frame according to some of the aforementioned claims **characterized in that** at least one first part (21) with the work-piece (2) forms a pair moving relatively towards each other both with one second part (22a) carrying the tool (4a) and with at least one other second part (22b) carrying the tool (4b).

12. The device for reduction of force transfer to a frame according to claim 11, **characterized in that** at least one tool (4b) forms a support against deformation of the work-piece (2) during machining by at least one tool (4a).

13. The device for reduction of force transfer to a frame according to some of the aforementioned claims **characterized in that** the fixed braces (6) and/or the push braces (7) and/or the additional braces (17) and/or the rotational braces (9) of the parallel kinematic structures are formed by a moveable part (44) of the brace and a static part (43) of the brace, whereas between the moveable part (44) of the brace and the static part (43) of the brace there is an intermediate mass (27) arranged, carrying one part of a transformation linear electric motor (26), the second part of which is arranged on the static part (43) of the brace and one part of a main linear electric motor (25), the second part of which is arranged on the moveable part (44) of the brace and the particular parts are arranged coaxially or axially symmetrically or symmetrically towards a common axis (32) of the both motors.

14. The device for reduction of force transfer to a frame according to claim 13, **characterized in that** a primary part (28) of the main linear electric motor (25), a primary part (30) of the transformation linear electric motor (26) and the integrating intermediate mass (27) carrying a secondary part (29) of the main linear electric motor (25) and a secondary part (31) of the transformation electric motor (26) are coaxial or symmetrical in accordance with one plane.

15. The device for reduction of force transfer to a frame according to claim 13 and/or 14 with the fixed brace (6) and/or the push brace (7) and/or the additional brace (17) **characterized in that** the integrating intermediate mass (27) is inserted moveably inside the static part (43) of the brace and inside the movable part (44) of the brace, whereas the primary part (28) of the main linear electric motor (25) and the primary part (30) of the transformation linear electric motor (26) encompass the integrating intermediate mass (27) and they are arranged one after another.

16. The device for reduction of force transfer to a frame according to claim 13 and/or 14 with the rotational brace (9) **characterized in that** the integrating intermediate mass (27) is inserted rotationally inside a stator (46) of the brace (9) and outside a rotor (45) of the brace, whereas the primary part (28) of the main linear electric motor (25) and the primary part (30) of the transformation linear electric motor (26) surround the integrating intermediate mass (27) and they are arranged concentrically.

17. The device for reduction of force transfer to a frame according to some of the aforementioned claims 13 to 16 **characterized in that** the integrating intermediate mass (27) is cylindrical and passes through cylindrical parts of the primary part (28) of the main linear electric motor (25) and of the primary part (30) of the transformation linear electric motor (26).

18. The device for reduction of force transfer to a frame according to some of the aforementioned claims 13 to 17 with the fixed brace (6) and/or the push brace (7) and/or the additional brace (17) **characterized in that** the integrating intermediate mass (27) is U-shaped and it passes through the closed profiles of the primary part (28) of the main linear electric motor (25) and of the primary part (30) of the transformation linear electric motor (26).

19. The device for reduction of force transfer to a frame according to some of the aforementioned claims 13 to 18 **characterized in that** the integrating intermediate mass (27) is tubular, whereas on its inner surface there is the secondary part (29) of the main linear electric motor (25) arranged and on its outer surface there is the secondary part (31) of the transformation linear electric motor (26) arranged.

20. The device for reduction of force transfer to a frame according to some of the aforementioned claims 13 to 19 **characterized in that** the common axis (32) of the main linear electric motor (25) and transformation linear electric motor (26) passes through centres of the rotational joints (10) of the connected parts of the equipment.
